# EUROPÄISCHE PATENTSCHRIFT

(11) **EP 1 078 150 B1**
(45) Veröffentlichungstag und Bekanntmachung des Hinweises auf die Patenterteilung: **27.03.2002**
(21) Anmeldenummer: 99923512.0
(22) Anmeldetag: 03.05.1999
(51) Int. Cl.: F01N 3/28

(54) **KATALYTISCHER KONVERTER, INSBESONDERE FÜR EINEN DIESELMOTOR ODER EINEN MAGERMOTOR**
CATALYTIC CONVERTER, ESPECIALLY FOR A DIESEL OR LEAN-MIXTURE ENGINE
POT CATALYTIQUE, NOTAMMENT POUR MOTEUR DIESEL OU MOTEUR A MELANGE PAUVRE

(30) Priorität: 12.05.1998 DE 19820971
(43) Veröffentlichungstag der Anmeldung: 28.02.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); KONIECZNY, Jörg-Roman, D-53721 Siegburg (DE)
(74) Vertreter: Kahlhöfer, Hermann, Dipl.-Phys.
(86) Internationale Anmeldenummer: EP9902997
(87) Internationale Veröffentlichungsnummer: WO9958827

(56) Entgegenhaltungen:
- EP-A- 0 596 854
- EP-A- 0 622 530
- EP-A- 0 705 962
- WO-A-92/02716
- US-A- 5 549 873

## Beschreibung

Die vorliegende Erfindung betrifft einen katalytischen Konverter nach dem Oberbegriff des Anspruchs 1. Im Hinblick auf immer strenger werdende Umweltgesetzgebungen in vielen Ländern müssen katalytische Konverter zur Reinigung von Abgas immer präziser an die Verbrennungskraftmaschinen von Kraftfahrzeugen und deren Betriebsweise angepaßt werden.

Bei der Abgasreinigung von Otto-Motoren ist es bekannter Stand der Technik, zur Verringerung des Schadstoffausstoßes in der Kaltstartphase einen katalytischen Konverter zu verwenden, der eine erste Zone mit möglichst geringer Wärmekapazität pro Volumeneinheit aufweist, damit sich diese Zone schnell aufheizt, die katalytische Reaktion auslöst und durch die dabei entstehende Wärmeenergie weiter hinten liegende Teile des katalytischen Konverters aufheizt. Ein Beispiel für einen solchen katalytischen Konverter ist in der WO 92/02716 beschrieben.

Wabenkörper mit im vorderen Bereich verringerter Wärmekapazität beschreiben auch die US 5,549,873 und die EP 0 705 962 A1. Allen drei Schriften ist gemeinsam, daß in der ersten Zone eine geringere Oberfläche vorhanden ist als in der zweiten Zone, wodurch im wesentlichen die Verringerung der Wärmekapazität erreicht wird.

Neben den beschriebenen monolithischen Wabenkörpern mit einer ersten Zone verringerter Wärmekapazität gibt es in vielen Abgasanlagen Lösungen mit zwei Wabenkörpern, von denen der erste eine geringere Kanalzahl pro Querschnittsfläche und dadurch eine geringere Wärmekapazität hat.

Ein genereller Trend der Entwicklung in den letzten Jahren geht hin zu dünneren Wänden bei allen Wabenkörpern und zu einer insgesamt möglichst geringen Wärmekapazität. Der Grund dafür ist neben Gewichtseinsparung vor allem der gewünschte möglichst geringe Druckverlust im Abgassystem in Verbindung mit möglichst großen Oberflächen pro Volumeneinheit.

Diese im wesentlichen bei Otto-Motoren gewonnenen und zutreffenden Erkenntnisse beziehen sich auf übliche Motorkonzepte, bei denen das Gemisch von Abgas und Brennstoff möglichst genau stöchiometrisch geregelt wird.

Diese Konzepte lassen sich jedoch nicht ohne weiteres auf Dieselmotoren oder sogenannte Magermotoren, d. h. mit erheblichem Luftüberschuß betriebene Motoren, inbesondere mit Benzin-Direkteinspritzung, übertragen. Wegen des hohen Luftüberschusses im Abgas herrschen dort beim Betrieb wesentlich niedrigere Temperaturen als bei stöchiometrischem Betrieb. Zwar bleibt natürlich der Wunsch bestehen, nach dem Kaltstart des Verbrennungsmotors im katalytischen Konverter möglichst schnell die für die katalytische Umsetzung notwendige Betriebstemperatur zu erreichen, jedoch treten im späteren Betrieb, insbesondere in Leerlaufphasen so niedrige Abgastemperaturen auf, daß ein katalytischer Konverter unter Umständen unter die zur Umsetzung nötige Betriebstemperatur abgekühlt wird, woraufhin in einer nachfolgenden Lastphase zunächst Schadstoffe an die Umwelt abgegeben werden.

Aufgabe der vorliegenden Erfindung ist es daher, einen katalytischen Konverter zur Reinigung von Abgas zu schaffen, welcher insbesondere für Dieselmotoren und Magermotoren geeignet ist, nach dem Kaltstart des Motors schnell seine Betriebstemperatur erreicht, diese jedoch in nachfolgenden Phasen geringerer Abgastemperatur nicht schnell wieder verliert.

Zur Lösung dieser Aufgabe dient ein katalytischer Konverter nach dem Anspruch 1. Vorteilhafte Weiterbildungen sind in den abhängigen Ansprüchen angegeben.

Ein entscheidender Schritt der vorliegenden Erfindung liegt darin, im katalytischen Konverter hinter der üblichen und auch im vorliegenden Fall gewünschten Zone geringer Wärmekapazität eine zweite Zone mit besonders hoher Wärmekapazität pro Volumeneinheit des Wabenkörpers zu schaffen. Entgegen dem Entwicklungstrend wird dabei ein höheres Gewicht und ein geringfügig höherer Druckverlust im Hinblick auf die erheblich verbesserten Abgasreinigungswerte in Kauf genommen.

Erfindungsgemäß weist ein katalytischer Konverter zur Reinigung von Abgas mindestens einen mit katalytisch aktivem Material beschichteten Wabenkörper auf, der vom Abgas durchströmbare, durch Wände voneinander getrennte Kanäle aufweist, wobei der Konverter in Strömungsrichtung hintereinander eine erste und eine zweite Zone aufweist, wobei die erste Zone eine geringere Wärmekapazität pro Volumeneinheit des Wabenkörpers aufweist als die zweite. Die zweite Zone hat dabei eine besonders hohe Wärmekapazität von mindestens 800 Joule pro Liter und Kelvin [J/lK], vorzugsweise mindestens 900. Die Wirkung dieser hohen Wärmekapazität in der zweiten Zone besteht in einer Speicherung von Wärme, die bei geringer Abgastemperatur die katalytische Reaktion für eine gewisse Zeit aufrechterhalten kann.

Nach dem Kaltstart des Motors heizt sich die erste Zone, wie nach dem Stand der Technik bekannt, schnell auf und beginnt mit der katalytischen Umsetzung von schädlichen Abgasbestandteilen, insbesondere Kohlenwasserstoffen und Kohlenmonoxid. Diese Reaktion ist exotherm und unterstützt die schnelle Aufheizung der zweiten Zone, die nun beginnt, Wärme zu speichern. Für die Umsetzung in dieser Kaltstartphase reicht die Oberfläche der ersten Zone des katalytischen Konverters weitestgehend aus, so daß die langsame Aufwärmung der zweiten Zone keine Nachteile für den Schadstoffausstoß bringt. Dafür kann die zweite Zone in einer nachfolgenden Betriebsphase mit geringer Abgastemperatur die katalytische Reaktion durch die gespeicherte Wärme weiter aufrechterhalten, während die erste Zone wegen ihrer geringen Wärmekapazität schnell abgekühlt wird unter die notwendige Umsetzungstemperatur. In einer wiederum folgenden Phase höherer Abgastemperatur verlagert sich die exotherme Umsetzung schnell wieder in die erste Zone, wodurch die zweite Zone wieder aufgeheizt wird und neue Wärme speichern kann. Dieser Vorgang führt insgesamt zu einer gleichmäßig effektiven Abgasreinigung auch bei wechselnder Betriebsweise des Motors, wie sie insbesondere beim Fahrbetrieb innerhalb von Ortschaften und bei entsprechenden Testzyklen auftreten kann.

Grundsätzlich gibt es mehrere Möglichkeiten, einen katalytischen Konverter mit einer zweiten Zone besonders hoher Wärmekapazität herzustellen. Die Wärmekapazität kann durch Erhöhung der Wanddicke der Trägerstruktur und/oder durch Erhöhung der Dicke der Beschichtung erreicht werden. Zusätzlich kann natürlich die Anzahl der Zellen pro Querschnittsfläche gegenüber der ersten Zone erhöht werden.

Bei einer bevorzugten Ausführungsform besteht der katalytische Konverter aus zwei einzelnen Wabenkörpern, die nahe beieinander oder räumlich etwas getrennt angeordnet sein können, wobei der zweite Wabenkörper dickere Wände als der erste Wabenkörper hat. Im Falle von aus Metallblechlagen gewickelten, geschichteten oder geschlungenen Wabenkörpern soll erfindungsgemäß die erste Zone eine durchschnittliche Wanddicke ohne Beschichtung von wenigster als 0,06 mm, vorzugsweise weniger als 0,04 mm aufweisen, während die zweite Zone im Durchschnitt eine Wanddicke ohne Beschichtung von mehr als 0,06 mm, vorzugsweise mehr als 0,08 mm, insbesondere 0,11 mm aufweist. Da es aus fertigungstechnischen und/oder mechanischen Gründen eventuell erforderlich sein kann, einzelne Blechlagen, insbesondere die glatten und die gewellten Blechlagen unterschiedlich dick auszuführen, wird im vorliegenden Fall die durchschnittliche Dicke der Metallblechlagen angegeben. Besonders bevorzugt ist es aber, alle Blechlagen in einer Zone gleich dick zu machen. Die bisher für metallische Wabenkörper kaum in Betracht gezogenen Blechdicken von mehr als 0,08 mm ermöglichen aufgrund der hohen Wärmekapazität der üblicherweise verwendeten rostfreien Stähle die Speicherung einer beachtlichen Wärmemenge, welche den als Beschichtung auf den Blechlagen vorhandenen keramischen Washcoat für eine gewisse Zeit auf Betriebstemperatur halten kann, auch wenn die Abgastemperatur stark abfällt.

Alternativ oder additiv kann natürlich in einem katalytischen Konverter auch die Dicke der Beschichtung in der ersten und zweiten Zone unterschiedlich sein, so daß sich in der ersten Zone eine Gesamtdicke der Wände mit Beschichtung von weniger als 0,08 mm ergibt und in der zweiten Zone eine Gesamtdicke größer als 0,1 mm, vorzugsweise größer als 0,12 mm. Dies ist besonders für monolithische Wabenkörper aus einem Trägermaterial durchgehend gleicher Dicke eine Möglichkeit, zwei Zonen unterschiedlicher Wärmekapazität zu schaffen.

Um in der Kaltstartphase trotz der sich langsam aufheizenden zweiten Zone genügend Oberfläche für die katalytische Umsetzung zu haben, sollte die erste Zone eine axiale Länge von 10 bis 60 mm, vorzugsweise von 20 bis 50 mm haben. Insgesamt sollte aber die zweite Zone eine mindestens doppelt so große axiale Länge wie die erste Zone haben. Für beide Zonen hat sich eine Anzahl von mindestens 360 cpsi (cells per squareinch) als günstig herausgestellt.

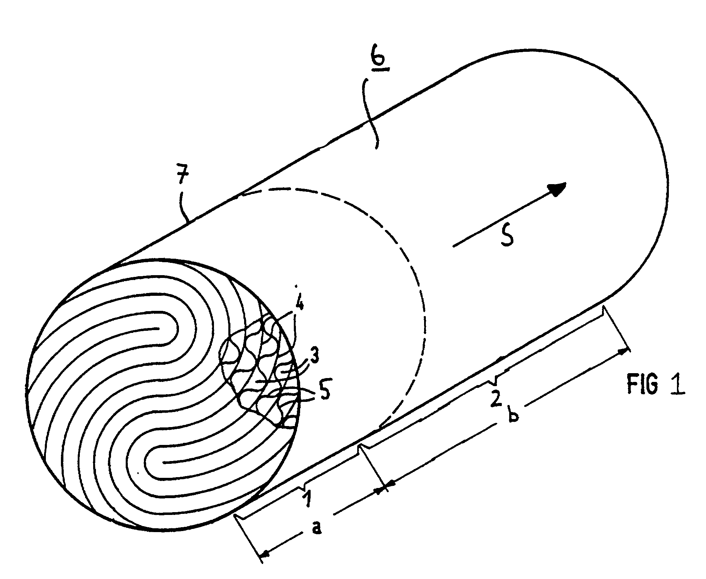

Weitere Einzelheiten und Vorteile der Erfindung werden im folgenden anhand der Zeichnung, die ein schematisches Ausführungsbeispiel der Erfindung zeigt, näher erläutert.

In der Zeichnung ist ein katalytischer Konverter mit einem Wabenkörper 6 dargestellt. Dieser Wabenkörper hat eine erste axiale Zone 1 der axialen Länge a und eine zweite axiale Zone 2 der axialen Länge b. Der Wabenkörper 6 wird in Strömungsrichtung S vom Abgas einer Verbrennungskraftmaschine, insbesondere eines Dieselmotors oder eines Magermotors, durchströmt. Es sei darauf hingewiesen, daß der Wabenkörper 6 ein monolithischer Wabenkörper sein kann, in dem die Zonen 1, 2 mit unterschiedlicher Wärmekapazität ausgebildet sind, es kann aber auch eine Anordnung aus zwei getrennten Wabenkörper für die beiden Zonen 1, 2 sein, die dann in einem gemeinsamen Mantelrohr 7 untergebracht sind. Der Wabenkörper gemäß dem vorliegenden Ausführungsbeispiel ist aus gegensinnig miteinander verschlungenen glatten 4 und gewellten 5 Metallblechlagen aufgebaut, welche für Abgas durchströmbare Kanäle 3 bilden. In einem bevorzugten Ausfiihrungsbeispiel ist die Dicke aller Bleche in der ersten Zone 1 etwa 0,03 mm, in der zweiten Zone 2 hingegen etwa 0,11 mm. Für die zweite Zone ergibt sich daraus eine Wärmekapazität mit Beschichtung von über 900 J/lK.

Die vorliegende Erfindung ermöglicht die effektive Abgasreinigung bei wechselnden Betriebszuständen eines Dieselmotors oder eines Magermotors, wobei die erfindungsgemäße Lösung einfach, kostenmäßig günstig und mit nur geringen Nachteilen bezüglich Gewicht und Druckverlust behaftet ist.

### Bezugszeichenliste

- 1: erste axiale Zone
- 2: zweite axiale Zone
- 3: Kanal
- 4: glatte Blechlage
- 5: gewellte Blechlage
- 6: Wabenkörper
- 7: Mantelrohr

- a: Länge der ersten axialen Zone
- b: Länge der zweiten axialen Zone
- S: Strömungsrichtung

## Patentansprüche

1. Katalytischer Konverter zur Reinigung von Abgas einer Verbrennungskraftmaschine, insbesondere eines Dieselmotors oder eines Magermotors, mit mindestens einem mit katalytisch aktivem Material beschichteten Wabenkörper (6), der vom Abgas durchströmbare, durch Wände (4, 5) voneinander getrennte Kanäle (3) aufweist, wobei der Konverter in Strömungsrichtung (S) hintereinander eine erste (1) und eine zweite (2) Zone aufweist, wobei die erste Zone (1) eine geringere Wärmekapazität pro Volumeneinheit des Wabenkörpers (6) aufweist als die zweite (2), **dadurch gekennzeichnet, daß** die zweite Zone (2) eine Wärmekapazität von mindestens 800 Joule pro Liter und Kelvin [J/lK], vorzugsweise mindestens 900, aufweist.

2. Katalytischer Konverter nach Anspruch 1, wobei der Wabenkörper (6) aus zumindest teilweise strukturierten Metallblechlagen (4, 5) gewickelt, geschichtet oder geschlungen ist, welche die Wände der Kanäle (3) bilden, **dadurch gekennzeichnet, daß** die Metallblechlagen (4, 5) in der ersten Zone (1) im Durchschnitt ohne Beschichtung eine Dicke von weniger als 0,06 mm, vorzugsweise weniger als 0,04 mm, aufweisen und in der zweiten Zone im Durchschnitt ohne Beschichtung eine Dicke von mehr als 0,06 mm, vorzugsweise mehr als 0,08 mm, insbesondere eine Dicke von 0,11 mm.

3. Katalytischer Konverter nach Anspruch 1 oder 2, **dadurch gekennzeichnet, daß** die Dicke der Wände (3) mit Beschichtung in der ersten Zone (1) kleiner als 0,08 mm ist und in der zweiten Zone (2) größer als 0,1mm, vorzugsweise größer als 0,12 mm.

4. Katalytischer Konverter nach Anspruch 1, 2 oder 3, **dadurch gekennzeichnet, daß** die erste Zone (1) und die zweite Zone (2) von zwei getrennten Wabenkörpern gebildet sind.

5. Katalytischer Konverter nach Anspruch 1, 2 oder 3, **dadurch gekennzeichnet, daß** die erste Zone (1) und die zweite Zone (2) in einem monolithischen Wabenkörper (6) ausgebildet sind.

6. Katalytischer Konverter nach Anspruch 3, **dadurch gekennzeichnet, daß** die erste Zone (1) und die zweite Zone (2) durch unterschiedlich dicke Beschichtungen ausgebildet sind.

7. Katalytischer Konverter nach einem der vorhergehenden Ansprüche, **dadurch gekennzeichnet, daß** die axiale Länge (b) der zweite Zone (2) mindestens doppelt so groß ist wie die axiale Länge (a) der ersten Zone (1).

8. Katalytischer Konverter nach einem der vorhergehenden Ansprüche, **dadurch gekennzeichnet, daß** die erste Zone (1) eine axiale Länge (a) von 10 bis 60 mm, vorzugsweise von 20 bis 50 mm, hat.

9. Katalytischer Konverter nach einem der vorhergehenden Ansprüche, **dadurch gekennzeichnet, daß** die Zahl der Kanäle pro Querschnittsfläche in der ersten (1) und der zweiten (2) Zone etwa gleich ist, insbesondere größer als 360 cpsi (cells per squareinch).

10. Katalytischer Konverter nach einem der vorhergehenden Ansprüche, **dadurch gekennzeichnet, daß** die spezifische Oberfläche pro Volumeneinheit in der ersten und der ersten (1) und der zweiten (2) Zone im wesentlichen gleich ist.

11. Abgasanlage eines Dieselmotors, insbesondere eines Kraftfahrzeuges, **dadurch gekennzeichnet, daß** ein Katalytischer Konverter nach einem der Ansprüche 1 bis 8 installiert ist.

12. Abgasanlage eines Magermotors, insbesondere eines Kraftfahrzeuges mit Benzin-Direkteinspritzung, **dadurch gekennzeichnet, daß** ein Katalytischer Konverter nach einem der Ansprüche 1 bis 8 und 11 installiert ist.

## Claims

1. Catalytic converter for cleaning exhaust gas from an internal combustion engine, in particular a diesel engine or a lean-burn engine, comprising at least one honeycomb body (6) which is coated with catalytically active material and which has passages (3) through which the exhaust gas can flow and which are separated from each other by walls (4, 5), wherein the converter has a first zone (1) and a second zone (2) in succession in the flow direction (S), wherein the first zone (1) has a lower thermal capacity per unit volume of the honeycomb body (6) than the second zone (2), **characterized in that** the second zone (2) has a thermal capacity of at least 800 joules per liter and Kelvin [J/lK], preferably at least 900.

2. Catalytic converter according to claim 1, wherein the honeycomb body (6) is wound, layered or twisted from at least partially structured sheet metal layers (4, 5) which form the walls of the passages (3), **characterized in that** the sheet metal layers (4, 5) in the first zone (1) are on average of a thickness without coating of less than 0,06 mm, preferably less than 0,04 mm, and in the second zone on average they are of a thickness without coating of more than 0,06 mm, preferably more than 0,08 mm, in particular they are of a thickness of 0,11 mm.

3. Catalytic converter according to claim 1 or 2, **characterized in that** the thickness of the walls (3) with coating in the first zone (1) is smaller than 0,08 mm and in the second zone (2) it is greater than 0,1 mm, preferably greater than 0,12 mm.

4. Catalytic converter according to claim 1, 2 or 3, **characterized in that** the first zone (1) and the second zone (2) are formed by two separate honeycomb bodies.

5. Catalytic converter according to claim 1, 2 or 3, **characterized in that** the first zone (1) and the second zone (2) are formed in a monolithic honeycomb body (6).

6. Catalytic converter according to claim 3, **characterized in that** the first zone (1) and the second zone (2) are formed by coatings of different thicknesses.

7. Catalytic converter according to one of the preceding claims, **characterized in that** the axial length (b) of the second zone (2) is at least twice as great as the axial length (a) of the first zone (1).

8. Catalytic converter according to one of the preceding claims, **characterized in that** the first zone (1) is of an axial length (a) of 10 to 60 mm, preferably 20 to 50 mm.

9. Catalytic converter according to one of the preceding claims, **characterized in that** the number of passages per cross-sectional area is approximately equal in the first zone (1) and the second zone (2), and in particular is greater than 360 cpsi (cells per square inch).

10. Catalytic converter according to one of the preceding claims, **characterized in that** the specific surface area per volume of unit is substantially equal in the first zone (1) and the second zone (2).

11. Exhaust system of a diesel engine, in particular of a motor vehicle, **characterized in that** a catalytic converter according to one of claims 1 to 8 is installed.

12. Exhaust gas system of a lean-burn engine, in particular of a motor vehicle with direct petrol injection, **characterized in that** a catalytic converter according to one of claims 1 to 8 and 11 is installed.

## Revendications

1. Convertisseur catalytique pour l'épuration de gaz d'échappement d'une machine à combustion interne, notamment d'un moteur diesel ou d'un moteur à mélange pauvre, avec au moins un corps en nids d'abeilles (6) étant revêtu de matériau à effet catalytique, le corps en nids d'abeilles présentant des canaux (3) pouvant être traversés par le gaz d'échappement et séparés les uns des autres par des parois (4, 5), le convertisseur comprenant dans le sens de l'écoulement (S) l'une derrière l'autre une première (1) et une deuxième zone, la première zone (1) ayant une capacité thermique par unité de volume du corps en nids d'abeilles (6) plus faible que la deuxième (2), **caractérisé en ce que** la deuxième zone (2) présente une capacité thermique d'au moins 800 Joule par litre et Kelvin [J/lK], de préférence d'au moins 900.

2. Convertisseur catalytique selon la revendication 1, **caractérisé en ce que** le corps en nids d'abeilles (6) est enroulé, empilé ou enlacé à partir de couches de tôles métalliques (4, 5) au moins partiellement structurées qui forment les parois des canaux (3), **caractérisé en ce que** les couches de tôles métalliques (4, 5) présentent dans la première zone (1) en moyenne sans revêtement une épaisseur de moins de 0,06 mm, de préférence de moins de 0,04 mm et dans la deuxième zone en moyenne sans revêtement une épaisseur de plus de 0,06 mm, de préférence de plus de 0,08 mm, notamment une épaisseur de 0,11 mm.

3. Convertisseur catalytique selon la revendication 1 ou 2, **caractérisé en ce que** l'épaisseur des parois (3) avec revêtement est plus faible que 0,08 mm dans la première zone (1) et dans la deuxième zone (2) plus élevée que 0,1 mm, de préférence plus élevée que 0,12 mm.

4. Convertisseur catalytique selon la revendication 1, 2 ou 3, **caractérisé en ce que** la première zone (1) et la deuxième zone (2) sont formées de deux corps en nids d'abeilles séparés.

5. Convertisseur catalytique selon la revendication 1, 2 ou 3, **caractérisé en ce que** la première zone (1) et la deuxième zone (2) sont réalisées dans un corps en nids d'abeilles (6) monolithique.

6. Convertisseur catalytique selon la revendication 3, **caractérisé en ce que** la première zone (1) et la deuxième zone (2) sont réalisées par des revêtements d'épaisseur différente.

7. Convertisseur catalytique selon l'une des revendications précédentes, **caractérisé en ce que** la longueur axiale (b) de la deuxième zone (2) a au moins deux fois la grandeur que la longueur axiale (a) de la première zone (2).

8. Convertisseur catalytique selon l'une des revendications précédentes, **caractérisé en ce que** la première zone (1) a une longueur axiale (a) de 10 à 60 mm, de préférence de 20 à 50 mm.

9. Convertisseur catalytique selon l'une de revendications précédentes, **caractérisé en ce que** le nombre de canaux par aire de section transversale est approximativement pareil dans la première (1) et dans la deuxième (2) zone, notamment plus grand que 360 cpsi (cells per squareinch).

10. Convertisseur catalytique selon l'une des revendications précédentes, **caractérisé en ce que** la surface spécifique par unité de volume dans la première (1) et dans la deuxième (2) zone est sensiblement la même.

11. Installation de gaz d'échappement d'un moteur diesel, notamment d'un véhicule automobile, **caractérisée en ce qu'**un convertisseur catalytique selon l'une des revendications 1 à 8 est installé.

12. Installation de gaz d'échappement d'un moteur à mélange pauvre, notamment d'un véhicule automobile à injection directe d'essence, **caractérisée en ce qu'**un convertisseur catalytique selon l'une des revendications 1 à 8 et 11 est installé.
